# EUROPEAN PATENT APPLICATION

(11) **EP 1 598 980 A1**
(43) Date of publication of application: **23.11.2005**
(21) Application number: 05252855.1
(22) Date of filing: 10.05.2005
(51) Int. Cl.: H04L 12/24

(54) **Service object for network management**

(30) Priority: 18.05.2004 US 848268
(71) Applicant: Marconi Intellectual Property (Ringfence) Inc., Warrendale, Pennsylvania 15086 (US)
(72) Inventor: Morris, Stephen, County Wexford (IE)
(74) Representative: O'Connell, David Christopher

(57) **Abstract**

A telecommunications system includes a first site. The system includes an ingress node in communication with the first site. The system includes a network in communication with the ingress node. The system includes an egress node in communication with the network. The system includes a second site in communication with the egress node. The system includes an NMS in communication with the network in which a unified end-to-end view defined by the first and second sites, the ingress and egress nodes and the network are stored. A method for managing a telecommunications system. The method includes the steps of identifying a unified end-to-end view of relationships between multiple related network-resident objects. There is the step of storing the unified view in an NMS.

## Description

### FIELD OF THE INVENTION

The present invention is related to managing a telecommunications system. More specifically, the present invention is related to managing a telecommunications system that provides an end-to-end view using an NMS.

### BACKGROUND OF THE INVENTION

Modern networks feature a growing range of constituent technologies (e.g., IP, MPLS, ATM, Frame Relay, Ethernet, HDLC, etc.). Managing these technologies has tended to be done piecemeal using existing network management systems (NMS). In this way, the individual technologies have been separately managed in the standard functional areas of fault, configuration, accounting, performance, security, etc. The difficulty with this fragmented approach is that an end-to-end viewpoint is hard to visualize using the existing generation of NMS tools. Worse still is the trend among some vendors who have split up their NMS applications so that different applications are provided for managing the different components of complex network services.

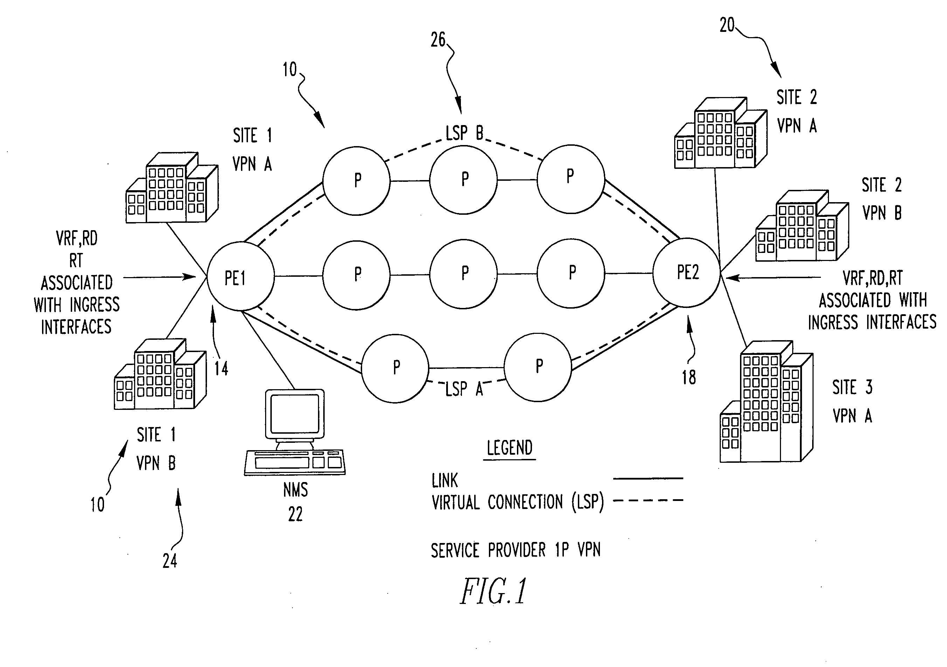

As network management moves up the value chain, it is becoming necessary to visualize and manipulate the end-to-end network 'service' picture rather than a disparate set of low-level components. An example of such a service is an IP VPN. This is a multi-node, multi-technology service where a number of enterprise sites are interconnected across a service provider MPLS network core as illustrated in Figure 1. There are other configurations and applications of VPN technology, but a relatively simple one is chosen for the purpose of illustration.

In Figure 1, two VPNs (VPN A and B) created by the service provider using the NMS inside its network are shown. The VPN is provided as a commercial service to the users (in this case, the enterprise sites illustrated in Figure 1). Typically, the users will purchase features that allow for data privacy (traffic does not pass between VPNs), quality of service (QoS), service level agreements, encryption, etc. The service provider must employ advanced NMS technology to effect this, which is why service support is required. In summary, the VPN in figure 1 consists of the collection of node-specific ingress interfaces, VRFs, RDs, RTs, and core LSPs. Taken together these make up the overall VPN service. A typical VPN deployment can consist of hundreds of PE nodes and thousands of VPNs.

The Service Object invention is an effort to provide a unified representation and view of such multi-service networks. One reason why this problem has not been solved is the issue of scale that arises from polling networks for large amounts of interconnect data (in order to acquire the end-to-end details).

### SUMMARY OF THE INVENTION

The present invention pertains to a telecommunications system. The system comprises a first site. The system comprises an ingress node in communication with the first site. The system comprises a network in communication with the ingress node. The system comprises an egress node in communication with the network. The system comprises a second site in communication with the egress node. The system comprises an NMS in communication with the network in which a unified end-to-end view defined by the first and second sites, the ingress and egress nodes and the network are stored.

The present invention pertains to a method for managing a telecommunications system. The method comprises the steps of identifying a unified end-to-end view of relationships between multiple related network-resident objects. There is the step of storing the unified view in an NMS.

### BRIEF DESCRIPTION OF THE DRAWINGS

In the accompanying drawings, the preferred embodiment of the invention and preferred methods of practicing the invention are illustrated in which:
Figure 1 is a schematic representation of a system of the present invention.
Figure 2 is a schematic representation of leveraging a database rather than the network.
Figure 3 is a schematic representation of the system with an enterprise WAN.

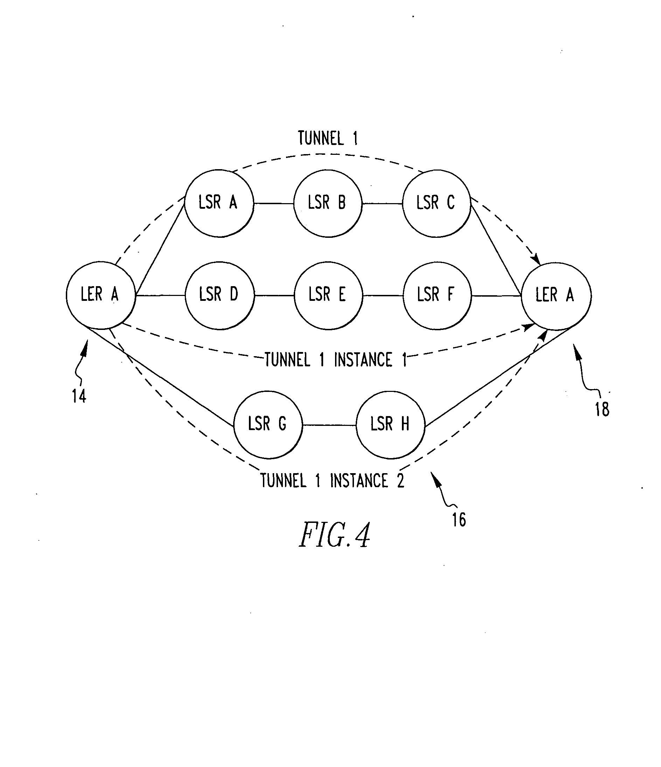

Figure 4 is a schematic representation of an MIPLS tunnel trunk service.

### DETAILED DESCRIPTION

Referring now to the drawings wherein like reference numerals refer to similar or identical parts throughout the several views, and more specifically to figure 1 thereof, there is shown a telecommunications system 10. The system 10 comprises a first site 12. The system 10 comprises an ingress node 14 in communication with the first site 12. The system 10 comprises a network 16 in communication with the ingress node 14. The system 10 comprises an egress node 18 in communication with the network 16. The system 10 comprises a second site 20 in communication with the egress node 18. The system 10 comprises an NMS 22 in communication with the network 16 in which a unified end-to-end view defined by the first and second sites 12, 20, the ingress and egress nodes 14, 18 and the network 16 are stored.

The present invention pertains to a method for managing a telecommunications system 10. The method comprises the steps of identifying a unified end-to-end view of relationships between multiple related network-resident objects. There is the step of storing the unified view in an NMS 22.

Preferably, the identifying step includes the step of identifying site level 24 and network level 26 components including an ingress node 14 and an egress node 18 of the network level 26. The identifying step preferably includes the step of discovering the unified end-to-end view from the NMS 22.

Preferably, the identifying step includes the step of forming the unified end-to-end view by listing the site level 24 and network level 26 components.

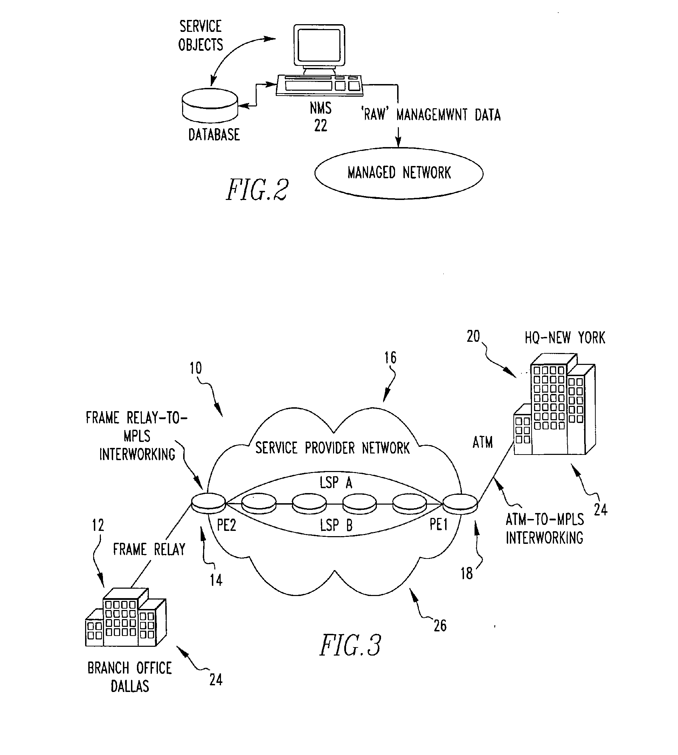

In the operation of the invention, an important aspect of the Service Object is that it presents no major additional traffic to the network 16 while simultaneously being able to furnish the NMS 22 user with an end-to-end view. This is achieved by leveraging the NMS 22 database rather than the network 16 as illustrated in Figure 2.

In Figure 2, the service provider uses the NMS 22 to discover the network-resident service components but the more complex Service Object discovery is derived using only the high-capacity database. This imposes no load on the network 16 but allows the service provider to gain all the benefits of an end-to-end view of the associated Service Objects.

The value of this invention is that network 16 operators (the owners of the NMS 22) can start to view their abstract service components. This will help in reducing the cost of managing multiservice networks as well as providing differentiation in the associated products. Service providers can sell highly differentiated services and then manage them effectively via the NMS 22 Service Objects.

An example of such a service is a guaranteed SMbps WAN link between two offices, one located in Dallas and the other in New York as illustrated in Figure 3.

This is conceptually similar to Figure 1, except that here leased line replacement is indicated. Instead of leasing a dedicated and expensive line between the two locations, a virtual line is used. The latter is comprised of the following elements:
1. From the HQ site, an ATM customer handoff service
2. An ATM-to-MPLS interworking facility at PE1
3. Inside the service provider network, a pair of MPLS virtual connections (i.e., LSPs A and B)
4. A Frame Relay-to-MPLS interworking facility at PE2
5. From the Branch Office site, a Frame Relay customer handoff service

The composition of these entities makes up the Service Object. The service provider will then sell an end-to-end packaged service to the enterprise customer made up of the above constituents. There may be additional elements associated with the service, such as, service level assurance agreements (e.g., 10Mbp guaranteed). The Service Object can easily be extended to accommodate this.

Each of the components of the service can be marked in the NMS 22 as belonging to one overall Service Object. The latter can then be created/modified/deleted as required in the network 16. During the lifecycle of the service, the corresponding Service Object will exist and map to the actual deployed network 16 service.

The value of the Service Object lies in the ease it gives the service provider in creating, monitoring, updating and deleting such multi-node, multi-component services. Many other examples of such services are becoming commonplace, e.g., IF VPNs, layer 2 VPNs, leased line replacement, etc. The Service Object technology can be extended to support these and other as yet undiscovered services.

Although the invention has been described in detail in the foregoing embodiments for the purpose of illustration, it is to be understood that such detail is solely for that purpose and that variations can be made therein by those skilled in the art without departing from the spirit and scope of the invention except as it may be described by the following claims.

## Claims

1. A telecommunications system comprising:
a first site;
an ingress node in communication with the first site;
a network in communication with the ingress node;
an egress node in communication with the network;
a second site in communication with the egress node; and
an NMS in communication with the network in which a unified end-to-end view defined by the first and second sites, the ingress and egress nodes and the network are stored.

2. A method for managing a telecommunications system comprising the steps of:
identifying a unified end-to-end view of relationships between multiple related network-resident objects; and
storing the unified view in an NMS.

3. A method as described in Claim 2 wherein the identifying step includes the step of identifying site level and network level components including an ingress node and an egress node of the network level.

4. A method as described in Claim 3 wherein the identified step includes the step of discovering the unified end-to-end view from the NMS.

5. A method as described in Claim 3 wherein the identifying step includes the step of forming the unified end-to-end view by listing the site level and network level components.
